(19) Europäisches Patentamt
European Patent Office
Office européen des brevets

(11) EP 2 366 094 B1

(12) **FASCICULE DE BREVET EUROPEEN**

(45) Date de publication et mention
de la délivrance du brevet:
**01.04.2015 Bulletin 2015/14**

(21) Numéro de dépôt: **09775186.1**

(22) Date de dépôt: **14.12.2009**

(51) Int Cl.:
***G01C 5/00*** *(2006.01)*     ***G08G 5/02*** *(2006.01)*

(86) Numéro de dépôt international:
**PCT/EP2009/067114**

(87) Numéro de publication internationale:
**WO 2010/069934 (24.06.2010 Gazette 2010/25)**

(54) **PROCEDE DE CORRECTION DE L'ALTITUDE BAROMETRIQUE POUR UN AERONEF**

VERFAHREN MIT DRUCKHÖHENKORREKTUR FÜR EIN FLUGZEUG

METHOD WITH PRESSURE ALTITUDE CORRECTION FOR AN AIRCRAFT

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **16.12.2008 FR 0807060**

(43) Date de publication de la demande:
**21.09.2011 Bulletin 2011/38**

(73) Titulaire: **THALES**
**92200 Neuilly-sur-Seine (FR)**

(72) Inventeurs:
• **BAUD, Olivier**
**92130 Issy Les Moulineaux (FR)**
• **HONORE, Nicolas**
**75015 Paris (FR)**

(74) Mandataire: **Collet, Alain**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A-2006/048674**    **US-A- 5 402 116**
**US-A1- 2003 097 216**    **US-A1- 2007 200 761**
**US-A1- 2008 191 942**    **US-B1- 7 389 164**

**Description**

La présente invention concerne un procédé de correction de l'altitude barométrique d'aéronefs mis en oeuvre dans un système de contrôle du trafic aérien. Elle concerne notamment les systèmes de pistage d'aéronefs sur la base de multiples capteurs.

Le contrôle du trafic aérien, ou ATC selon l'acronyme de Air Traffic Control, permet à des contrôleurs aériens d'assurer l'exécution sûre, rapide et efficace des vols d'aéronefs dans l'espace aérien sous surveillance. Son rôle est principalement de prévenir les collisions entre les aéronefs et le sol ou les véhicules, ainsi que les collisions en vol entre aéronefs. Il consiste aussi à accélérer et ordonner la circulation aérienne, à fournir aux aéronefs les avis et renseignements utiles à l'exécution sûre et efficace du vol, tels que les informations météorologiques, l'information sur l'état des moyens au sol de navigation, l'information sur le trafic. Il consiste enfin à fournir un service d'alerte pour prévenir les organismes appropriés lorsque les aéronefs ont besoin de l'aide des organismes de secours et de sauvetage, et à prêter à ces organismes le concours nécessaire.

Les données nécessaires à la gestion du contrôle du trafic aérien proviennent essentiellement d'une pluralité de capteurs. Parmi ces capteurs, des radars primaires de surveillance ou PSR selon l'acronyme de Primary Surveillance Radars, fournissent des échos de cibles, via des informations d'azimut, de distance et de l'instant de détection.

Des données sont aussi fournies par des radars secondaires de surveillance ou SSR selon l'acronyme de Secondary Surveillance Radars ; un SSR envoie des signaux à des cibles. Lorsque ces cibles sont des aéronefs équipés de transpondeurs, ces derniers envoient en retour des informations, qui sont reçues par le SSR. Les informations reçues par le SSR comprennent la distance et l'azimut, ainsi que les informations complémentaires fournies par le transpondeur selon son type. Ainsi un transpondeur compatible avec le mode A/C fournit une donnée d'identification de l'aéronef (mode A), et une donnée d'altitude barométrique (mode C). L'ensemble des données fournies par un SSR permet donc une identification des aéronefs évoluant dans son champ de vision, ainsi que la connaissance de leurs positions respectives dans un repère tridimensionnel. Il existe encore des transpondeurs équipés d'un mode perfectionné ou Mode S, fournissant sur requête les mêmes données que le mode A/C, en plus d'une identification univoque de l'aéronef codée sur 24 bits, et de moyens de communication bilatérale de données diverses.

D'autres données de localisation d'aéronefs et objets au sol sont fournies par des capteurs de multilatération ou MLAT, consistant en une pluralité d'antennes omnidirectionnelles disséminées sur le sol, recevant des signaux envoyés par un aéronef afin de le localiser. Ces signaux peuvent être non sollicités, ou bien envoyés par l'aéronef en réponse de signaux provenant de radars. Des calculs portant sur les différences entre les temps de réception de ces signaux entre au moins deux antennes permettent de déterminer la position de l'aéronef. Ce type de capteur est largement utilisé pour la surveillance de mouvements au sol dans des zones d'aéroport et dans les zones d'approche. Une autre technique procédant d'une manière similaire est utilisée pour la localisation d'aéronefs en dehors de zones d'approche d'aéroports, basée sur les signaux reçus par une pluralité d'antennes omnidirectionnelles disposées sur des zones géographiques beaucoup plus larges ; cette technique porte le nom de WAM, selon l'acronyme pour Wide Area Multilateration.

Il existe aussi des systèmes de surveillance automatique et dépendante des aéronefs, connus sous les acronymes d'ADS pour Automatic Dépendent Surveillance. Un premier système d'ADS, dénommé ADS-C selon l'acronyme pour Automatic Dépendent Surveillance - Contract, est utilisé essentiellement pour les zones dans lesquelles peu de capteurs d'autres types sont disponibles, par exemple les zones désertiques ou océaniques. Les aéronefs qui en sont équipés radiodiffusent vers un satellite de communication des données relatives à leur position, par exemple déterminée par un calculateur embarqué sur la base de données fournies par un récepteur de géo-localisation par satellite ou GPS selon l'acronyme pour Global Positioning System, et / ou par une centrale inertielle. D'autres données sont diffusées, telles que des données sur la route envisagée par l'aéronef, les vitesses de l'aéronef par rapport à l'air et au sol, des données météorologiques (force et direction du vent, température, etc.). La diffusion de ces données par l'aéronef peut se faire de manière périodique, ou bien en réaction à certains événements, ou encore en cas de situation d'urgence. Les données sont ensuite transmises par le satellite et sont reçues par une antenne dédiée.

Un second système d'ADS est dénommé ADS-B selon l'acronyme pour Automatic Dépendent Surveillance - Broadcast. Les aéronefs qui en sont équipés radiodiffusent les données décrites précédemment en référence à l'ADS-C, directement vers une antenne au sol. La transmission se fait de manière périodique, à une fréquence bien plus élevée, d'au moins une émission par seconde.

Toutes les données en provenance de tous les capteurs précités, après avoir parfois subi un prétraitement au niveau des capteurs mêmes, sont recueillies par un central de contrôle de trafic aérien, où elles sont traitées, avant d'être diffusées sous forme synthétique aux contrôleurs aériens via des interfaces d'affichage. Il est primordial pour les contrôleurs de pouvoir procéder au pistage des aéronefs présents dans l'espace aérien. Le pistage d'un aéronef consiste à suivre sa piste, c'est-à-dire la représentation de l'évolution de l'aéronef dans l'espace aérien, en projection sur le plan stéréographique situé au niveau de la mer. Une autre donnée d'importance majeure dans la localisation d'un aéronef, donc son pistage, est l'altitude. Les données fournies par un PSR par exemple, qui sont prises en compte dans la détermination de la position d'un aéronef, ne contiennent aucune composante liée à l'altitude : une détection d'un PSR peut correspondre à une multitude d'altitudes différentes ; réciproquement sans la donnée d'altitude, la cible détectée correspond à une multitude de projections possibles sur la surface terrestre. Les données fournies par un SSR contiennent une composante liée à l'altitude : il s'agit de l'altitude barométrique fournie par le mode C du transpondeur. Néanmoins l'altitude barométrique transmise par le mode C et issue d'un alticodeur, est donnée en référence à la pression standard au niveau de la mer dans des conditions normales de pression et de température, à savoir : 1013,25 hectoPascal pour une température de 15° C. La pression atmosphérique pouvant varier significativement d'une zone géographique à une autre zone géographique relativement proche, la donnée de l'altitude barométrique mode C utilisée dans les calculs doit être assortie d'une forte variance.

L'incertitude ou la variance quant à l'estimation de l'altitude d'un aéronef se répercute sur les calculs de position, ainsi que sur tous les calculs mis en oeuvre dans un système de contrôle du trafic aérien, comme par exemple les calculs réalisés dans le but de déclencher des alertes en cas de risques de collisions entre aéronefs. Il est donc souhaitable d'appliquer une correction à l'altitude barométrique des radars mode A/C, afin d'améliorer la précision de la position, et de réduire la variance.

En outre, il est utile pour les contrôleurs de connaître les altitudes géométriques des aéronefs, ou bien des altitudes barométriques corrigées en fonction des conditions météorologiques dans les zones dans lesquelles les aéronefs se situent. Une altitude barométrique corrigée est fournie en référence au QNH : le QNH prend en considération la valeur de pression actuelle au niveau de la mer.

Le central de contrôle du trafic aérien n'effectue une correction des valeurs d'altitude barométrique en fonction du QNH que sur la zone dans laquelle il est situé, c'est-à-dire typiquement sur la zone d'aéroport, en fonction de données fournies par des services météorologiques. Ces données sont mises à jour avec une fréquence très faible (par exemple : une fois par jour) : non seulement la pression dans la zone d'aéroport peut être amenée à varier de manière significative dans le temps, entre deux mises à jour de la donnée de pression atmosphérique par le service météorologique, mais encore elle peut varier significativement entre la zone d'aéroport et une zone distante de l'aéroport, dans la zone d'intérêt. Pour cette raison, la correction d'altitude barométrique n'est effectivement réalisée que dans les zones d'aéroport, pour des aéronefs évoluant à de faibles altitudes, c'est-à-dire à des altitudes inférieures à l'altitude de transition. Dans une zone d'aéroport, l'altitude barométrique est prise en compte par le filtre en position, et considérée comme une altitude géométrique avec une variance associée augmentée d'une valeur forfaitaire visant à compenser le maximum de variation de la correction barométrique.

US 5 402 116 A (ASHLEY ALLAN) utilise deux émetteurs-récepteurs, séparés par une distance fixe, qui collectent les données d'altitudes et de valeurs barométriques. Les émetteurs-récepteurs à antennes rotatives interrogent les avions de passage.

Ainsi, en l'absence de correction de l'altitude barométrique, c'est-à-dire pour les aéronefs situés dans des zones extérieures aux zones d'aéroport, la donnée d'altitude est biaisée, plus ou moins fortement, en fonction des conditions atmosphériques. Par conséquent, l'évaluation de la précision du pistage est rendue aléatoire suivant que les conditions atmosphériques soient favorables ou défavorables, c'est-à-dire plus ou moins proches des conditions atmosphériques standard. En outre, dans des conditions atmosphériques favorables, c'est-à-dire dans des zones où la pression atmosphérique est proche de la pression atmosphérique standard, la composante en altitude est surlissée, ce qui dégrade la précision du filtre en position, en particulier lorsque la cible est manoeuvrante.

Un but de la présente invention est de pallier les inconvénients précités, en proposant notamment un procédé apte à appliquer aux altitudes barométriques des aéronefs présents dans une zone de surveillance, une correction appropriée en fonction des conditions atmosphériques environnant chacun des aéronefs, afin de réduire la variance sur les valeurs d'altitude et ainsi la précision des calculs, sans que des données spécifiques ne soient fournies par des services météorologiques.

A cet effet, l'invention a pour objet un procédé de correction de l'altitude barométrique d'aéronefs, caractérisé en ce qu'il comprend les étapes suivantes :

- une étape préalable de découpage du plan stéréographique correspondant à une zone de surveillance en une grille bidimensionnelle comprenant une pluralité de cellules ;
- une première étape de démarrage d'une fenêtre temporelle de détection d'une durée déterminée, de détection de rapports de type ADS-B;

pour chaque rapport de type ADS-B reçu pendant la fenêtre temporelle de détection :

- une étape d'acquisition et de mémorisation des couples de valeurs d'altitude barométrique et altitude géométrique (C ; H) issus des rapports ADS-B associés aux cellules correspondantes ;

après la fin de la fenêtre temporelle de détection :

- une étape de démarrage d'une fenêtre temporelle de calcul de durée déterminée ;
- une étape de calcul de valeurs de pression et de température ($P_0$ ; $T_0$) au niveau de la mer pour toutes les cellules, à partir de tous les couples (C ; H) acquis pour ces cellules au cours d'une période déterminée, et de calcul d'une correction de l'altitude barométrique à partir des valeurs de température et de pression au niveau de la mer calculées, pour toutes les cibles détectées par au moins un capteur, à la verticale des cellules.

Dans un mode de réalisation de l'invention, le procédé de correction de l'altitude barométrique d'aéronefs décrit ci-dessus, peut être caractérisé en ce que le calcul des valeurs ($P_0$ ; $T_0$) de pression et de température au niveau de la mer réalisé lors de l'étape de calcul au terme de la fenêtre temporelle est opéré sur la base de deux couples de valeurs ($C_i$; $H_i$) et ($C_j$ ; $H_j$) acquis au cours de la fenêtre temporelle, selon les formules suivantes :

$$P_0 = \frac{P_{0standard}}{1 - \dfrac{na(C_j H_i - C_i H_j)}{T_{0standard}(C_j - C_i)}},$$

et

$$T_0 = T_{0standard} \frac{\left( H_i - \dfrac{T_{0standard}}{a} \left( \dfrac{P_0 - P_{0standard}}{nP_0} \right) \right)}{C_i \left( 1 - \left( \dfrac{P_0 - P_{0standard}}{nP_0} \right) \right)}.$$

Dans un mode de réalisation de l'invention, le procédé de correction de l'altitude barométrique d'aéronefs décrit ci-dessus peut être caractérisé en ce que ledit au moins un capteur est un radar secondaire mode A/C, la correction de l'altitude barométrique réalisée lors de l'étape de calcul pour une détection en provenance d'un radar secondaire de surveillance fournissant une altitude barométrique corrigée selon la formule suivante :

$$C_{corr} = \frac{T_0}{T_{0standard}} \left( C(\frac{P_{0standard}}{P_0})^{\frac{1}{n}} + \frac{T_{0standard}}{a} \left( 1 - (\frac{T_{0standard}}{T_0})^{\frac{1}{n}} \right) \right).$$

Dans un mode de réalisation de l'invention, le procédé de correction de l'altitude barométrique d'aéronefs décrit ci-dessus peut être caractérisé en ce que les couples de valeurs (C ; H) mémorisés lors de l'étape d'acquisition et de mémorisation sont supprimés s'ils correspondent à des détections à des niveaux d'altitude inférieurs à un premier seuil déterminé et / ou supérieurs à un second seuil déterminé.

Dans un mode de réalisation de l'invention, le procédé de correction de l'altitude barométrique d'aéronefs décrit ci-dessus peut être caractérisé en ce que les deux couples de valeurs ($C_i$ ; $H_i$) et ($C_j$ ; $H_j$) sont respectivement les deux couples correspondant aux deux détections de plus basse altitude géométrique H.

Dans un mode de réalisation de l'invention, le procédé de correction de l'altitude barométrique d'aéronefs décrit ci-dessus peut être caractérisé en ce que l'étape de calcul comprend en outre une étape de vérification de la cohérence des valeurs des couples (C ; H) mémorisés pour une cellule donnée, un couple de valeurs (C ; H) étant considéré comme cohérent si la différence entre la valeur corrigée de l'altitude barométrique C et l'altitude géométrique H est inférieure à un seuil déterminé ou incohérent dans le cas contraire ; un ou plusieurs couples de valeurs considérés comme incohérents entraînant le choix de deux couples ($C_i$ ; $H_i$) et ($C_j$ ; $H_j$) différents.

Dans un mode de réalisation de l'invention, le procédé de correction de l'altitude barométrique d'aéronefs décrit ci-dessus peut être caractérisé en ce que des valeurs de pression et de température au niveau de la mer ($P_0$ ; $T_0$) sont calculées lors de l'étape de calcul, pour toutes les paires de couples de valeurs (C ; H) d'une cellule donnée, l'étape de calcul comprenant un calcul supplémentaire fournissant une moyenne des valeurs ($P_0$ ; $T_0$) calculées et appliquant à la cellule la valeur moyenne du couple ($P_0$ ; $T_0$).

Dans un mode de réalisation de l'invention, le procédé de correction de l'altitude barométrique d'aéronefs décrit ci-dessus peut être caractérisé en ce que l'étape de calcul comprend un calcul supplémentaire des valeurs de pression et de température au niveau de la mer ($P_0$ ; $T_0$) pour des cellules pour lesquelles aucun couple de valeurs ($P_0$ ; $T_0$) n'est

attribué et juxtaposées à au moins un nombre déterminé de cellules adjacentes pour lesquelles des valeurs ($P_0$ ; $T_0$) ont été déterminées, le calcul attribuant aux cellules la moyenne barycentrique des valeurs ($P_0$ ; $T_0$) de toutes les cellules adjacentes.

Dans un mode de réalisation de l'invention, le procédé de correction de l'altitude barométrique d'aéronefs décrit ci-dessus peut être caractérisé en ce que le nombre déterminé de cellules adjacentes pour lesquelles des valeurs ($P_0$ ; $T_0$) ont été déterminées est égal à 4.

Dans un mode de réalisation de l'invention, le procédé de correction de l'altitude barométrique d'aéronefs décrit ci-dessus peut être caractérisé en ce qu'aucune valeur du couple ($P_0$ ; $T_0$) n'est calculé pour une cellule donnée lors de l'étape de calcul si le nombre de couples de valeurs (C ; H) mémorisés pour cette cellule est inférieur à un nombre prédéterminé.

Dans un mode de réalisation de l'invention, le procédé de correction de l'altitude barométrique d'aéronefs décrit ci-dessus peut être caractérisé en ce que le nombre prédéterminé de couples de valeurs (C ; H) mémorisés est égal à 5.

Dans un mode de réalisation de l'invention, le procédé de correction de l'altitude barométrique d'aéronefs décrit ci-dessus peut être caractérisé en ce que les valeurs de pression et de température au niveau de la mer ($P_{0n}$ ; $T_{0n}$) pour une cellule donnée, telles que calculées lors de l'étape de calcul pour une fenêtre temporelle n, subissent un lissage avec les valeurs ($P_{0n-1}$ ; $T_{0n-1}$) déterminées pour la cellule pour une fenêtre temporelle précédente n-1, le lissage attribuant au couple de valeurs ($P_0$; $T_0$) la valeur $\alpha.(P_{0n-1}$ ; $T_{0n-1}) + (1 - \alpha).(P_{0n}$ ; $T_{0n})$, $\alpha$ étant un coefficient compris entre 0 et 1.

L'invention peut enfin avoir pour-objet un système de contrôle du trafic aérien caractérisé en ce qu'il comporte des moyens qui sont adaptés à mettre en oeuvre un procédé de correction de l'altitude d'aéronefs tel que décrit ci-dessus selon divers modes de réalisations de l'invention.

D'autres caractéristiques et avantages de l'invention apparaîtront à la lecture de la description, donnée à titre d'exemple, faite en regard des dessins annexés qui représentent :

- la figure 1, un schéma synoptique de la structure générale d'un système de contrôle du trafic aérien et des différents capteurs impliqués ;

- la figure 2, un exemple de courbe représentant la correction apportée à une altitude barométrique pour estimer une altitude géométrique, et la répercussion de la correction sur la position d'un aéronef donnée par un radar mode A/C ;

- la figure 3, un exemple du découpage en cellules du plan stéréographique correspondant à la zone de surveillance dans le cadre du contrôle du trafic aérien ;

- la figure 4, un ordinogramme représentant le procédé d'estimation d'altitude d'aéronefs selon l'invention ;

- la figure 5, un diagramme représentant un nuage de couples de valeurs d'altitudes barométriques et géométriques reçues au cours d'une fenêtre temporelle.

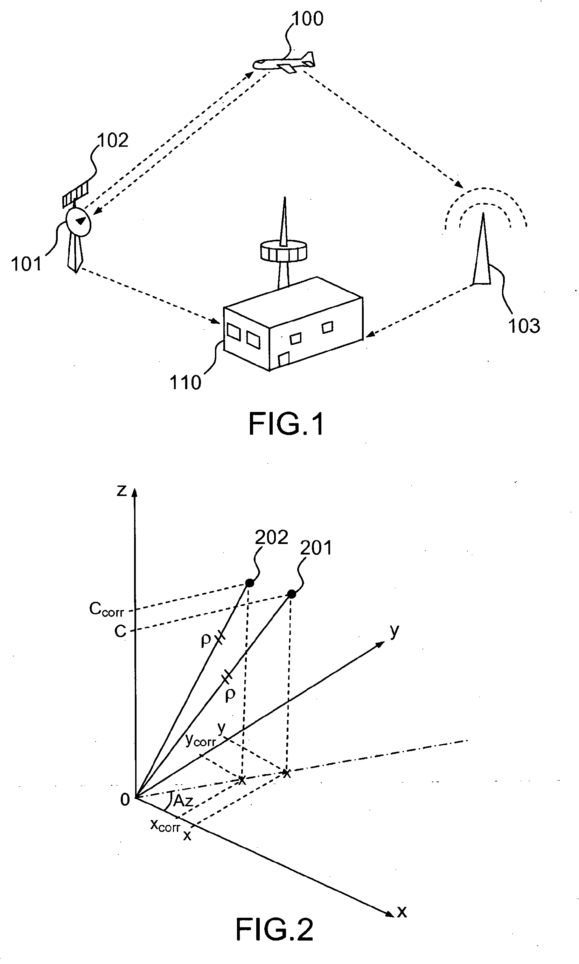

La figure 1 présente un schéma synoptique de la structure générale d'un système de contrôle du trafic aérien. Un aéronef 100 est en vol, il est la cible d'un radar primaire de surveillance PSR 101 monté avec un radar secondaire de surveillance SSR 102 dans cet exemple. Une antenne omnidirectionnelle 103 est dédiée à l'ADS-B. Un centre de contrôle du trafic aérien 110 recueille toutes les données en provenance des différents capteurs. Le PSR 101 émet une onde vers l'aéronef, et capte un écho de l'aéronef 100 lorsque celui-ci se trouve dans son champ de vision. L'analyse de l'onde réfléchie permet une estimation de la distance entre l'aéronef 100 et le PSR 101, ainsi que l'azimut. Le SSR émet une onde, lorsque celle-ci est captée par l'aéronef 100, le transpondeur de ce dernier, dans l'exemple de la figure compatible avec le mode A/C, émet à son tour un signal comprenant la distance et l'azimut, ainsi que la donnée d'identification de l'aéronef, et la donnée d'altitude barométrique.

Dans l'exemple de la figure, l'aéronef 100 est équipé d'un système ADS-B. Il émet donc périodiquement un signal, ou rapport ADS-B, contenant des informations complémentaires fournies par exemple par un récepteur embarqué de géo-positionnement par satellite. Parmi ces données complémentaires, se trouvent les coordonnées géodésiques de l'aéronef 100, selon le système connu sous l'acronyme de WGS 84, ainsi que son altitude barométrique. Ainsi chaque rapport ADS-B comprend, entre autres données, l'altitude géométrique H de l'aéronef 100 et son altitude barométrique C.

Le taux d'équipement ADS-B des avions de compagnies aériennes est aujourd'hui tel qu'il permet de couvrir les principales zones d'intérêt du trafic aérien. Un but de la présente invention est de mémoriser des couples de données d'altitudes barométriques et d'altitudes géométriques par zones géographiques et par altitudes géométriques ou niveaux de vol, afin de permettre le calcul, à partir d'au moins deux mesures récentes de tels couples, de la température et de la pression au niveau de la mer. Ce calcul permet de réaliser une cartographie météorologique de la zone d'intérêt. Par exemple, un découpage en cellules du plan stéréographique ramené au niveau moyen de la mer peut être réalisé. Par une pluralité de calculs, opérés sur la base de couples (C ; H) obtenus au cours du temps de divers aéronefs, il est possible d'associer à chacune des cellules des valeurs de pression et de température au niveau du sol. Un couple de pression et de température au niveau du sol, que nous noterons par la suite ($P_0$ ; $T_0$), peut être déterminé pour une cellule donnée, dès lors qu'au moins deux couples (C ; H) ont été obtenus d'aéronefs à la verticale de cette cellule. Le calcul des valeurs ($P_0$ ; $T_0$) peut être réalisé à partir de la formule suivante, selon le modèle d'atmosphère de l'Organisation de l'Aviation Civile Internationale (OACI) combinant la relation d'état des gaz parfaits et l'hypothèse hydrostatique :

$$H = \frac{T_0}{T_{0standard}}\left( C(\frac{P_{0standard}}{P_0})^{\frac{1}{n}} + \frac{T_{0standard}}{a}\left(1 - (\frac{T_{0standard}}{T_0})^{\frac{1}{n}}\right)\right) \quad (1),$$

où :

- H est l'altitude géométrique,
- C est l'altitude barométrique,
- $T_0$ est la température au niveau de la mer, avec $T_{0standard}$ = 288,15 K,
- $P_0$ est la pression au niveau de la mer, avec $P_{0standard}$ = 1013,25 hPa,
- a est la chute de la température avec l'altitude ; ici a = 0,0065 °C.m$^{-1}$,
- n = 5,2561

Ainsi pour une paire de couples (C ; H) notés ($C_i$ ; $H_i$) et ($C_j$ ; $H_j$) pour des relevés à la verticale d'une même cellule donnée, la pression et la température au niveau de la mer peuvent s'écrire :

$$P_0 = \frac{P_{0standard}}{1 - \dfrac{na(C_j H_i - C_i H_j)}{T_{0standard}(C_j - C_i)}} \quad (2),$$

$$T_0 = T_{0standard}\frac{\left(H_i - \dfrac{T_{0standard}}{a}\left(\dfrac{P_0 - P_{0standard}}{nP_0}\right)\right)}{C_i\left(1 - \left(\dfrac{P_0 - P_{0standard}}{nP_0}\right)\right)} \quad (3);$$

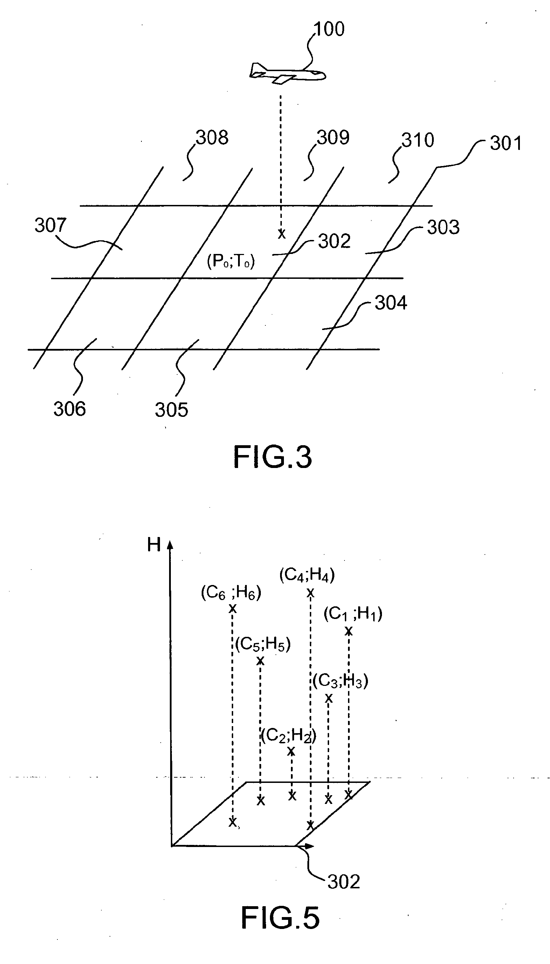

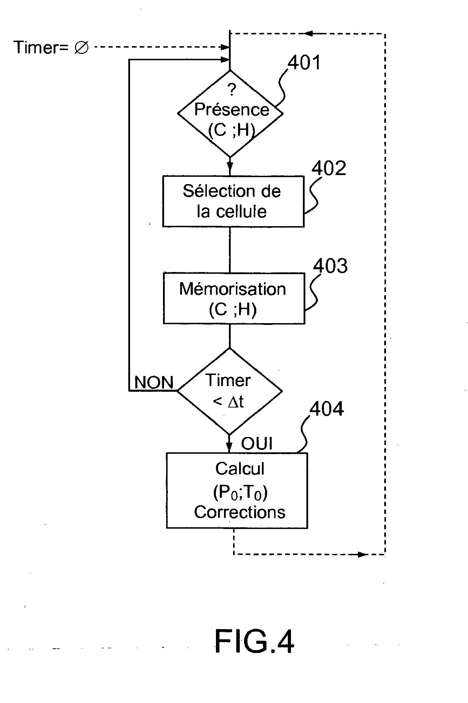

A partir du moment où des valeurs de pression et de température au niveau de la mer $P_0$ et $T_0$ ont été déterminées pour une cellule donnée, c'est-à-dire initialisées et validées comme explicité ci-après en référence aux figures 4 et 5, une correction de l'altitude barométrique pourra être effectuée par exemple pour toutes les détections radar mode A/C identifiées à la verticale de cette cellule, comme explicité ci-après en référence à la figure 3. Il est bien entendu que d'autres types de détections identifiées à la verticale de cette cellule, par exemple en provenance d'autres capteurs tels que le MLAT ou le WAM, pourront de la même manière subir une correction de l'altitude barométrique.

La figure 2 présente un exemple de courbe représentant la correction apportée à une altitude barométrique pour estimer une altitude géométrique, et la répercussion de la correction sur la position d'un aéronef 100 non représenté sur cette figure, donnée par un radar mode A/C. Dans cet exemple, une détection réelle d'un radar secondaire de surveillance SSR non représenté sur la figure, mais dont l'antenne est située à l'origine O du repère tridimensionnel orthonormé (O ; x ; y ; z), est représentée par un point 201 ; les coordonnées du point 201 dans le repère orthonormé sont x, y et C: Le point 201 est à une distance $\rho$ du SSR, et est relevé à un azimut Az, représenté sur la figure en faisant coïncider l'axe des abscisses du repère orthonormé avec l'azimut de référence du SSR. En outre le point 201 est relevé à une altitude barométrique C. Ces données sont fournies dans le rapport mode A/C, ainsi cette altitude C est donnée en référence à la pression standard de 1013,25 hPa. En admettant que pour la cellule (non représentée sur la figure) à la verticale de laquelle se situe le point 201, des valeurs $P_0$ et $T_0$ ont été déterminées, alors l'altitude barométrique C peut subir une correction. L'altitude barométrique après correction est notée $C_{corr}$. $C_{corr}$ est calculé selon la relation (1) décrite plus haut :

$$C_{\mathrm{corr}} = \frac{T_0}{T_{0\mathrm{standard}}} \left( C \left(\frac{P_{0\mathrm{standard}}}{P_0}\right)^{\frac{1}{n}} + \frac{T_{0\mathrm{standard}}}{a} \left( 1 - \left(\frac{T_{0\mathrm{standard}}}{T_0}\right)^{\frac{1}{n}} \right) \right) \quad (4).$$

Il est alors possible de reconstruire une détection SSR virtuelle, représentée par un point virtuel 202, situé de même à la distance $\rho$ du SSR, à l'azimut Az, et dont l'altitude est l'altitude barométrique corrigée $C_{\mathrm{corr}}$. L'abscisse et l'ordonnée du point virtuel 202 sont notées respectivement $x_{\mathrm{corr}}$ et $y_{\mathrm{corr}}$.

Les trois coordonnées du point 202 diffèrent de celles du point 201, et leur précision est améliorée puisque l'altitude barométrique $C_{\mathrm{corr}}$ correspond au QNH local. Ainsi tous les calculs réalisés sur la base de la position de l'aéronef 100 sont réalisés à partir de la position corrigée correspondant au point virtuel 202, ce qui évite de propager dans ces calculs l'erreur introduite par l'estimation de l'altitude barométrique en référence à la pression de 1013,25 hPa.

La figure 3 présente un exemple du découpage en cellules du plan stéréographique correspondant à la zone de surveillance dans le cadre du contrôle du trafic aérien selon l'invention. Une grille 301 peut par exemple comprendre des cellules de forme carrée, à l'instar d'une cellule 302 représentée. Les cellules adjacentes à la cellule 302 sont représentées par les références 303 à 310. Dans un exemple de réalisation de l'invention, chaque cellule peut avoir un côté de 10 Nm.

Dans un premier exemple, une détection de SSR peut se situer à la verticale de la cellule 302, pour la piste d'un aéronef 100 n'étant pas équipé d'un système ADS-B. L'altitude barométrique donnée par le rapport du mode C peut alors être corrigée en se basant sur les valeurs de pression et de température $P_0$ et $T_0$ déterminées pour cette cellule. Si les valeurs de $P_0$ et $T_0$ n'ont pas pu être déterminées pour cette cellule 302, alors aucune correction n'est appliquée. Avantageusement, si les valeurs de $P_0$ et $T_0$ n'ont pas pu être déterminées pour la cellule 302, mais que des valeurs de pression et de température au niveau de la mer ont pu être déterminées pour des cellules adjacentes 303 à 309, alors des valeurs $P_0$ et $T_0$ peuvent être attribuées par interpolation à la cellule 302. Par exemple, si des valeurs ont été déterminées pour au moins 4 des cellules 303 à 309, alors des valeurs $P_0$ et $T_0$ peuvent être calculées comme le barycentre de toutes les valeurs attribuées aux cellules adjacentes concernées.

La figure 4 présente un ordinogramme représentant le procédé d'estimation d'altitude d'aéronefs selon l'invention.

A un instant $t_0$, une fenêtre temporelle de détection de durée déterminée démarre, par la réinitialisation d'un compteur de temps. Cette durée peut par exemple durer 20 minutes. Au cours de cette fenêtre temporelle, des rapports ADS-B peuvent être reçus. A la réception d'un rapport ADS-B en provenance d'un aéronef, une première étape 401 a pour but de vérifier si des données d'altitude géométrique et d'altitude barométrique sont comprises dans le rapport. Si tel n'est pas le cas, alors aucune exploitation n'est faite des données reçues.

Si de telles données sont présentes dans le rapport, alors une étape 402 suivante a pour but de déterminer la cellule de la grille bidimensionnelle 301 à la verticale de laquelle se trouve l'aéronef dont est issu le rapport ADS-B, au moment de son émission.

Lors d'une étape 403 suivante, le couple (C ; H) nouvellement acquis est mémorisé pour la cellule considérée, la mémoire associée à cette cellule est ainsi augmentée d'un couple de valeurs supplémentaires, en plus de couples de valeurs éventuellement acquis précédemment au cours de la fenêtre temporelle courante ou bien au cours de fenêtres temporelles précédentes. Avantageusement, lors d'une étape, non représentée dans la figure, préalable à l'étape de mémorisation 403, il peut être vérifié que le couple de valeurs nouvellement acquis ne présente pas une aberration, pour cause par exemple d'un dysfonctionnement quelconque. Par exemple, il peut être vérifié que la différence entre les données comprises dans le dernier rapport ADS-B et les données comprises dans un ou des rapports ADS-B précédents pour le même aéronef, n'est pas plus importante qu'un seuil déterminé. Un couple présentant une telle aberration peut alors être définitivement discriminé afin de ne pas générer d'erreurs dans les calculs ultérieurs. Cette discrimination peut tout aussi bien être réalisée lors d'une étape ultérieure.

Un certain nombre de couples (C ; H) provenant de différents rapports ADS-B pour un ou une pluralité d'aéronefs sont ainsi mémorisés au cours de la fenêtre temporelle de détection. Lorsque la fenêtre temporelle courante est terminée, une fenêtre temporelle de calcul est démarrée.

En parallèle, les données acquises et mémorisées pendant la période qui vient de se terminer, sont traitées lors d'une étape 404. L'étape 404 a pour but de calculer les valeurs $P_0$ et $T_0$ pour toutes les cellules pour lesquelles ce calcul est réalisable, sur la base des relations (2) et (3) explicitées plus haut, et selon une méthode décrite ci-après sur la base d'un exemple, en référence à la figure 5. Avantageusement, les calculs réalisés à cette étape pour une cellule donnée peuvent n'être effectués qu'à la condition qu'au moins un nombre déterminé de couples (C ; H) soit disponible pour cette même cellule. En effet, d'une part il est nécessaire d'avoir au moins deux couples (C ; H) pour pouvoir déterminer les conditions de pression et de température au niveau de la mer ; d'autre part, il est préférable d'avoir un plus grand nombre de couples à disposition, afin d'éviter de fonder des calculs sur des valeurs isolées, par exemple en provenance d'un unique aéronef, pour se prévaloir plus efficacement contre des aberrations ayant pour cause un éventuel dysfonctionnement, par exemple des satellites de géo-positionnement. Avantageusement, le nombre minimum de couples nécessaires à la réalisation des calculs peut par exemple être fixé 5.

Une fois que les calculs des conditions de pression et de température au niveau de la mer ont été réalisés pour toutes les cellules possibles, les corrections d'altitude barométrique pourront être appliquées pour tous les aéronefs pour lesquels par exemple des détections de radar de surveillance secondaire SSR 102 auront été reçues à la verticale de ces cellules.

La figure 5 présente un diagramme représentant un nuage de couples de valeurs d'altitudes barométriques et géométriques reçues au cours d'une fenêtre temporelle.

Dans un souci de clarté, la figure se limite à une cellule 302 donnée. Bien sûr, la description ci-après s'applique pour toutes les cellules de la grille bidimensionnelle correspondant à l'espace aérien d'intérêt. En outre, la description ci-après est faite en référence à une fenêtre temporelle d'acquisition des rapports ADS-B, démarrant à l'instant t et se terminant à l'instant $t + \Delta t$. Soient $(P_{0n-1} ; T_{0n-1})$ les valeurs de pression et de température au niveau de la mer associées à la cellule 302 à l'instant t, issues d'un calcul réalisé à la fin de la fenêtre temporelle de détection précédente ; soient $(P_{0n} ; T_{0n})$ les valeurs de pression et de température au niveau de la mer associées à la cellule 302 à l'instant $t + \Delta t$, c'est-à-dire à l'issue de la fenêtre temporelle de détection courante.

Au cours de la fenêtre temporelle de détection, 6 couples de valeurs (C ; H) sont acquis dans l'exemple de la figure. Ces valeurs sont notées $(C_1 ; H_1)$ à $(C_6 ; H_6)$ dans l'ordre chronologique de leur acquisition. Dans un mode de réalisation, seuls les couples (C ; H) acquis au cours de la période temporelle de détection sont utilisés pour le calcul de $(P_{0n} ; T_{0n})$. Dans un mode alternatif de réalisation, des valeurs acquises lors d'une ou plusieurs fenêtres temporelles précédentes peuvent être utilisées. Avantageusement, chaque couple de valeurs (C ; H) peut être associé à la date de réception du rapport ADS-B correspondant, et un compteur de temps permet d'éliminer les couples de valeurs ayant atteint un âge déterminé, afin qu'elles ne soient plus utilisées dans les calculs.

Un premier couple de valeurs (C ; H) est utilisé comme référence. Par exemple, le couple du niveau d'altitude géométrique le plus bas est utilisé comme référence. Dans l'exemple de la figure, il s'agit du couple de valeurs $(C_2 ; H_2)$. Avantageusement, les couples de valeurs (C ; H) correspondant à des altitudes géométriques inférieures à un premier seuil d'altitude déterminé, peuvent être éliminés afin de ne pas être utilisés dans les calculs, les altitudes les plus basses étant sujettes à des phénomènes tels que les conditions de l'atmosphère modèle OACI ne peuvent plus y être appliquées en approximation. De la même manière, des couples de valeurs (C ; H) correspondant à des altitudes géométriques supérieures à un second seuil d'altitude déterminé peuvent être éliminés.

Un second couple de valeurs (C ; H) est utilisé en combinaison avec le premier couple de valeurs, soit $(C_2 ; H_2)$ dans l'exemple de la figure, afin de calculer le couple de valeurs $(P_{0n} ; T_{0n})$. Le second couple de valeurs (C ; H) peut par exemple être choisi comme le second couple de niveau d'altitude géométrique le plus bas, soit le couple de valeurs $(C_3 ; H_3)$ dans l'exemple de la figure.

Avantageusement, il peut être vérifié que les autres couples de valeurs (C ; H) associés à la cellule 302 présentent des valeurs cohérentes. Cette vérification peut par exemple être réalisée en appliquant à chaque valeur d'altitude barométrique C de chaque couple la correction imposée par le couple de valeurs $(P_{0n} ; T_{0n})$, et en vérifiant que chaque valeur $C_{corr}$ résultant de la correction est suffisamment proche de la valeur H correspondante. Si tel n'est pas le cas, il peut alors par exemple être prévu de choisir deux autres couples de valeurs, par exemple $(C_5 ; H_5)$ et $(C_1 ; H_1)$, pour procéder à un nouveau calcul de $(P_{0n} ; T_{0n})$ et à une nouvelle vérification avec les autres couples de valeurs (C ; H), et de procéder ainsi jusqu'à ce qu'une telle vérification s'avère satisfaisante. Dans un mode alternatif de réalisation, il peut être envisagé de procéder à différents calculs de $(P_{0n} ; T_{0n})$ pour toutes les paires de couples possibles par combinaison des couples de valeurs (C ; H) associés à la cellule, puis de procéder à une moyenne des valeurs de pression et de température ainsi déterminées pour obtenir le couple $(P_{0n} ; T_{0n})$, ou encore il est possible de ne conserver les valeurs $(P_{0n} ; T_{0n})$ déterminées pour toutes les paires de couples de valeurs (C ; H) possibles qu'à la condition qu'elles soient suffisamment proches des valeurs $(P_{0n-1} ; T_{0n-1})$ et / ou qu'elles soient suffisamment proches entre elles. Ces vérifications permettent notamment d'identifier et de s'affranchir d'éventuels effets dépressionnaires pouvant se produire à la verticale de la cellule 302, ou bien d'erreurs plus rares d'origine avionique pouvant conduire à certains rapports ADS-B contenant des valeurs erronées.

Dans toutes les situations précitées pouvant conduire à l'impossibilité d'effectuer un calcul du couple de valeurs $(P_{0n} ; T_{0n})$, il peut être envisagé de n'appliquer aucune correction aux altitudes barométriques des détections faites à la verticale de cette cellule, ou bien d'appliquer les valeurs $(P_{0n-1} ; T_{0n-1})$, assorties d'une augmentation de la variance sur l'amplitude de la correction.

Avantageusement les valeurs $(P_{0n} ; T_{0n})$ peuvent être lissées par rapport aux valeurs $(P_{0n-1} ; T_{0n-1})$, par exemple en attribuant au couple de valeurs $(P_0 ; T_0)$ un couple de valeurs défini par :

$$\alpha.(P_{0n-1}; T_{0n-1}) + (1 - \alpha).(P_{0n}; T_{0n})\ ;\ \alpha \text{ étant compris entre 0 et 1, et typiquement entre 0,3 et 0,4.}$$

**Revendications**

1. Procédé de correction de l'altitude barométrique d'aéronefs (100), **caractérisé en ce qu'**il comprend les étapes suivantes :

   • une étape préalable de découpage du plan stéréographique correspondant à une zone de surveillance en une grille bidimensionnelle (301) comprenant une pluralité de cellules (302, 304) ;
   • une première étape de démarrage d'une fenêtre temporelle de détection d'une durée déterminée, de détection de rapports de type ADS-B ;

   pour chaque rapport de type ADS-B reçu pendant la fenêtre temporelle de détection :

   • une étape (403) d'acquisition et de mémorisation des couples de valeurs d'altitude barométrique et altitude géométrique (C ; H) issus des rapports ADS-B associés aux cellules correspondantes ;

   après la fin de la fenêtre temporelle de détection :

   • une étape de démarrage d'une fenêtre temporelle de calcul de durée déterminée ;
   • une étape de calcul (404) de valeurs de pression et de température ($P_0$ ; $T_0$) au niveau de la mer pour toutes les cellules, à partir de tous les couples (C ; H) acquis pour ces cellules au cours d'une période déterminée, et de calcul d'une correction de l'altitude barométrique à partir des valeurs de température et de pression au niveau de la mer calculées, pour toutes les cibles détectées par au moins un capteur, à la verticale des cellules (302).

2. Procédé de correction de l'altitude barométrique d'aéronefs selon la revendication 1, **caractérisé en ce que** le calcul des valeurs ($P_0$ ; $T_0$) de pression et de température au niveau de la mer réalisé lors de l'étape de calcul (404) au terme de la fenêtre temporelle de calcul est opéré sur la base de deux couples de valeurs ($C_l$ ; $H_l$) et ($C_j$ ; $H_j$) acquis au cours de la fenêtre temporelle de détection, selon les formules suivantes :

$$P_0 = \frac{P_{0\text{standard}}}{1 - \dfrac{na(C_j H_i - C_i H_j)}{T_{0\text{standard}}(C_j - C_i)}} ,$$

et

$$T_0 = T_{0\text{standard}} \frac{\left( H_i - \dfrac{T_{0\text{standard}}}{a}\left( \dfrac{P_0 - P_{0\text{standard}}}{nP_0} \right) \right)}{C_i\left( 1 - \left( \dfrac{P_0 - P_{0\text{standard}}}{nP_0} \right) \right)} .$$

où:

   - H est l'altitude géométrique,
   - C est l'altitude barométrique,
   - $T_o$ est la température au niveau de la mer, avec $T_{0\text{standard}}$ = 288,15 K,
   - $P_o$ est la pression au niveau de la mer, avec $P_{0\text{standard}}$ = 1013,25 hPa,
   - a est la chute de la température avec l'altitude ; ici a = 0,0065°C.m$^{-1}$,
   - n = 5,2561

3. Procédé de correction de l'altitude barométrique d'aéronefs selon la revendication 1, **caractérisé en ce que** ledit au moins un capteur est un radar secondaire mode A/C, la correction de l'altitude barométrique réalisée lors de l'étape de calcul (404) pour une détection en provenance d'un radar secondaire de surveillance fournissant une altitude barométrique corrigée selon la formule suivante :

$$C_{\text{corr}} = \frac{T_0}{T_{0\text{standard}}} \left( C \left(\frac{P_{0\text{standard}}}{P_0}\right)^{\frac{1}{n}} + \frac{T_{0\text{standard}}}{a} \left( 1 - \left(\frac{T_{0\text{standard}}}{T_0}\right)^{\frac{1}{n}} \right) \right).$$

4. Procédé de correction de l'altitude barométrique d'aéronefs selon la revendication 1, **caractérisé en ce que** les couples de valeurs (C ; H) mémorisés lors de l'étape d'acquisition et de mémorisation (403) sont supprimés s'ils correspondent à des détections à des niveaux d'altitude inférieurs à un premier seuil déterminé et / ou supérieurs à un second seuil déterminé.

5. Procédé de correction de l'altitude barométrique d'aéronefs selon l'une des revendications 2 à 4, **caractérisé en ce que** les deux couples de valeurs (Ci ; Hi) et (Cj ; Hj) sont respectivement les deux couples correspondant aux deux détections de plus basse altitude géométrique H.

6. Procédé de correction de l'altitude barométrique d'aéronefs selon la revendication 5, **caractérisé en ce que** l'étape de calcul (404) comprend en outre une étape de vérification de la cohérence des valeurs des couples (C ; H) mémorisés pour une cellule (302) donnée, un couple de valeurs (C ; H) étant considéré comme cohérent si la différence entre la valeur corrigée de l'altitude barométrique C et l'altitude géométrique H est inférieure à un seuil déterminé ou incohérent dans le cas contraire ; un ou plusieurs couples de valeurs considérés comme incohérents entraînant le choix de deux couples ($C_i$ ; $H_i$) et ($C_j$ ; $H_j$) différents.

7. Procédé de correction de l'altitude barométrique d'aéronefs selon la revendication 1, **caractérisé en ce que** des valeurs de pression et de température au niveau de la mer ($P_0$ ; $T_0$) sont calculées lors de l'étape de calcul (404), pour toutes les paires de couples de valeurs (C ; H) d'une cellule donnée (302), l'étape de calcul (404) comprenant un calcul supplémentaire fournissant une moyenne des valeurs ($P_0$ ; $T_0$) calculées et appliquant à la cellule (302) la valeur moyenne du couple ($P_0$ ; $T_0$).

8. Procédé de correction de l'altitude barométrique d'aéronefs selon la revendication 1, **caractérisé en ce que** l'étape de calcul (404) comprend un calcul supplémentaire des valeurs de pression et de température au niveau de la mer ($P_0$ ; $T_0$) pour des cellules pour lesquelles aucun couple de valeurs ($P_0$ ; $T_0$) n'est attribué et juxtaposées à au moins un nombre déterminé de cellules adjacentes pour lesquelles des valeurs ($P_0$ ; $T_0$) ont été déterminées, le calcul attribuant aux cellules la moyenne barycentrique des valeurs ($P_0$ ; $T_0$) de toutes les cellules adjacentes.

9. Procédé de correction de l'altitude barométrique d'aéronefs selon la revendication 8, **caractérisé en ce que** le nombre déterminé de cellules adjacentes pour lesquelles des valeurs ($P_0$ ; $T_0$) ont été déterminées est égal à 4.

10. Procédé de correction de l'altitude barométrique d'aéronefs selon l'une quelconque des revendications précédentes, **caractérisé en ce qu'**aucune valeur du couple (P0 ; T0) n'est calculé pour une cellule donnée (302) lors de l'étape de calcul (404) si le nombre de couples de valeurs (C ; H) mémorisés pour cette cellule (302) est inférieur à un nombre prédéterminé.

11. Procédé de correction de l'altitude barométrique d'aéronefs selon la revendication 10, **caractérisé en ce que** le nombre prédéterminé de couples de valeurs (C ; H) mémorisés est égal à 5.

12. Procédé de correction de l'altitude barométrique d'aéronefs selon l'une quelconque des revendications précédentes, **caractérisé en ce que** les valeurs de pression et de température au niveau de la mer ($P_{0n}$ ; $T_{0n}$) pour une cellule (302) donnée, telles que calculées lors de l'étape de calcul (404) pour une fenêtre temporelle n, subissent un lissage avec les valeurs ($P_{0n-1}$ ; $T_{0n-1}$) déterminées pour la cellule (302) pour une fenêtre temporelle précédente n-1, le lissage attribuant au couple de valeurs ($P_0$ ; $T_0$) la valeur $\alpha$.($P_{0n-1}$ ; $T_{0n-1}$) + (1 - $\alpha$).($P_{0n}$; $T_{0n}$), $\alpha$ étant un coefficient compris entre 0 et 1.

13. Système de contrôle du trafic aérien **caractérisé en ce qu'**il comporte des moyens qui sont adaptés à mettre en oeuvre un procédé de correction de l'altitude d'aéronefs selon l'une quelconque des revendications précédentes.

**Patentansprüche**

1. Verfahren zum Korrigieren der barometrischen Höhe von Luftfahrzeugen (100), **dadurch gekennzeichnet, dass** es die folgenden Schritte beinhaltet:

   • einen Vorabschritt des Unterteilens der stereografischen Ebene, die einer Überwachungszone entspricht, in ein zweidimensionales Raster (301) mit mehreren Zellen (302, 304);
   • einen ersten Schritt des Startens eines Erkennungszeitfensters einer bestimmten Dauer zum Erkennen von Verhältnissen des ADS-B-Typs;

   für jedes während des Erkennungszeitfensters empfangene Verhältnis des ADS-B-Typs:

   • einen Schritt (403) des Erfassens und Speicherns von Wertepaaren von barometrischer Höhe und geometrischer Höhe (C; H), die von mit den entsprechenden Zellen assoziierten ADS-B-Verhältnissen kommen;

   nach dem Ende des Erkennungszeitfensters:

   • einen Schritt des Startens eines Rechenzeitfensters einer bestimmten Dauer;
   • einen Schritt (404) des Berechnens von Druck- und Temperaturwerten ($P_0$; $T_0$) auf Meeresspiegelniveau für alle Zellen auf der Basis aller für die Zellen während einer vorbestimmten Periode erfassten Paare (C; H) und des Berechnens einer Korrektur der barometrischen Höhe auf der Basis von Temperatur- und Druckwerten auf Meeresspiegelniveau, berechnet für alle von wenigstens einem Sensor erkannten Ziele auf der Vertikalen der Zellen (302).

2. Verfahren zum Korrigieren der barometrischen Höhe von Luftfahrzeugen nach Anspruch 1, **dadurch gekennzeichnet, dass** die Berechnung von Druck- und Temperaturwerten ($P_0$; $T_0$) auf Meeresspiegelniveau, die während des Rechenschrittes (404) am Ende des Rechenzeitfensters durchgeführt wird, auf der Basis von zwei Wertepaaren ($C_i$; $H_i$) und ($C_j$; $H_j$) erfolgt, erfasst während des Erkennungszeitfensters, gemäß den folgenden Formeln:

$$P_0 = \frac{P_{0standard}}{1 - \dfrac{na(C_j H_i - C_i H_j)}{T_{0standard}(C_j - C_i)}},$$

und

$$T_0 = T_{0standard} \frac{\left( H_i - \dfrac{T_{0standard}}{a}\left(\dfrac{P_0 - P_{0standard}}{nP_0}\right)\right)}{C_i\left(1 - \left(\dfrac{P_0 - P_{0standard}}{nP_0}\right)\right)},$$

wobei:

   - H die geometrische Höhe ist;
   - C die barometrische Höhe ist;
   - $T_0$ die Temperatur auf Meeresspiegelniveau ist, wobei $T_{0standard}$ = 288,15 K ist;
   - $P_0$ der Druck auf Meeresspiegelniveau ist, wobei $P_{0standard}$ = 1013,25 hPa ist;
   - a der Temperaturabfall mit der Höhe ist, hier ist a = 0,0065°C.m$^{-1}$;
   - n = 5,52561 ist.

3. Verfahren zum Korrigieren der barometrischen Höhe von Luftfahrzeugen nach Anspruch 1, **dadurch gekennzeichnet, dass** der wenigstens eine Sensor ein A/C-Moden-Sekundärradar ist, wobei die Korrektur der barometrischen Höhe, die während des Rechenschrittes (404) für eine von einem sekundären Überwachungsradar kommende Erkennung durchgeführt wird, eine barometrische Höhe ergibt, die gemäß der folgenden Formel korrigiert wird:

$$C_{\text{corr}} = \frac{T_0}{T_{0\text{standard}}} \left( C \left( \frac{P_{0\text{standard}}}{P_0} \right)^{\frac{1}{n}} + \frac{T_{0\text{standard}}}{a} \left( 1 - \left( \frac{T_{0\text{standard}}}{T_0} \right)^{\frac{1}{n}} \right) \right).$$

4. Verfahren zum Korrigieren der barometrischen Höhe von Luftfahrzeugen nach Anspruch 1, **dadurch gekennzeichnet, dass** die Wertepaare (C; H), die während des Schrittes (403) des Erfassens und Speicherns gespeichert werden, gelöscht werden, wenn sie Erkennungen auf Höhen unterhalb eines ersten bestimmten Schwellenwerts und/oder oberhalb eines zweiten bestimmten Schwellenwerts entsprechen.

5. Verfahren zum Korrigieren der barometrischen Höhe von Luftfahrzeugen nach einem der Ansprüche 2 bis 4, **dadurch gekennzeichnet, dass** die beiden Wertepaare (Ci; Hi) und (Cj; Hj) jeweils die beiden Paare sind, die den zwei Erkennungen auf einer geringeren geometrischen Höhe H entsprechen.

6. Verfahren zum Korrigieren der barometrischen Höhe von Luftfahrzeugen nach Anspruch 5, **dadurch gekennzeichnet, dass** der Rechenschritt (404) ferner einen Schritt des Verifizierens der Kohärenz der für eine gegebene Zelle (302) gespeicherten Werte der Paare (C; H) beinhaltet, wobei ein Wertepaar (C; H) dann als kohärent angesehen wird, wenn die Differenz zwischen dem korrigierten Wert der barometrischen Höhe C und der geometrischen Höhe H unterhalb einer bestimmten Schwelle liegt oder im gegenteiligen Fall inkohärent ist; wobei ein oder mehrere Wertepaare, die als inkohärent angesehen werden, die Wahl von zwei unterschiedlichen Paaren $(C_i; H_i)$ und $(C_j; H_j)$ bewirken.

7. Verfahren zum Korrigieren der barometrischen Höhe von Luftfahrzeugen nach Anspruch 1, **dadurch gekennzeichnet, dass** Druck- und Temperaturwerte auf Meeresspiegelniveau $(P_0; T_0)$ während des Rechenschrittes (404) für alle Wertepaarsätze (C; H) einer gegebenen Zelle (302) berechnet werden, wobei der Rechenschritt (404) eine zusätzliche Berechnung beinhaltet, die ein Mittel der berechneten Werte $(P_0; T_0)$ ergibt und den Mittelwert des Paares $(P_0; T_0)$ auf die Zelle (302) anwendet.

8. Verfahren zum Korrigieren der barometrischen Höhe von Luftfahrzeugen nach Anspruch 1, **dadurch gekennzeichnet, dass** der Rechenschritt (404) eine zusätzliche Berechnung von Druck- und Temperaturwerten $(P_0; T_0)$ auf Meeresspiegelniveau für Zellen beinhaltet, für die kein Wertepaar $(P_0; T_0)$ zugeordnet ist und die neben wenigstens einer bestimmten Zahl von benachbarten Zellen stehen, für die Werte $(P_0; T_0)$ ermittelt wurden, wobei die Berechnung den Zellen das baryzentrische Mittel der Werte $(P_0; T_0)$ aller benachbarten Zellen zuordnet.

9. Verfahren zum Korrigieren der barometrischen Höhe von Luftfahrzeugen nach Anspruch 8, **dadurch gekennzeichnet, dass** die bestimmte Zahl von benachbarten Zellen, für die Werte $(P_0; T_0)$ ermittelt wurden, 4 ist.

10. Verfahren zum Korrigieren der barometrischen Höhe von Luftfahrzeugen nach einem der vorherigen Ansprüche, **dadurch gekennzeichnet, dass** kein Wert des Paares $(P_0; T_0)$ für eine gegebene Zelle (302) während des Rechenschrittes (404) berechnet wird, wenn die Zahl der für die Zelle (302) gespeicherten Wertepaare (C; H) kleiner ist als eine vorbestimmte Zahl.

11. Verfahren zum Korrigieren der barometrischen Höhe von Luftfahrzeugen nach Anspruch 10, **dadurch gekennzeichnet, dass** die vorbestimmte Zahl von gespeicherten Wertepaaren (C; H) 5 ist.

12. Verfahren zum Korrigieren der barometrischen Höhe von Luftfahrzeugen nach einem der vorherigen Ansprüche, **dadurch gekennzeichnet, dass** die Druck- und Temperaturwerte auf Meeresspiegelniveau $(P_{0n}; T_{0n})$ für eine gegebene Zelle (302), berechnet während des Rechenschrittes (404) für ein Zeitfenster n, mit den Werten $(P_{0n-1}; T_{0n-1})$ geglättet werden, die für die Zelle (302) für ein vorangegangenes Zeitfenster n-1 ermittelt wurden, wobei die Glättung dem Wertepaar $(P_0; T_0)$ den Wert $\alpha(P_{0n-1}; T_{0n-1}) + (1 - \alpha).(P_{0n}; T_{0n})$ zuordnet, wobei $\alpha$ ein Koeffizient zwischen 0 und 1 ist.

13. Flugverkehrskontrollsystem, **dadurch gekennzeichnet, dass** es Mittel beinhaltet, die zum Implementieren eines Verfahrens zum Korrigieren der Höhe von Luftfahrzeugen nach einem der vorherigen Ansprüche ausgelegt sind.

**Claims**

1. A method for correcting the barometric altitude of aircraft (100), **characterised in that** it comprises the following steps:

   • a preliminary step of dividing the stereographic plane that corresponds to a surveillance zone into a two-dimensional grid (301) comprising a plurality of cells (302, 304);
   • a first step of starting a detection time window of a determined duration for detecting ratios of the ADS-B type;

   for each ratio of the ADS-B type received during said detection time window:

   • a step (403) of acquiring and of storing pairs of values of barometric altitude and of geometric altitude (C; H) originating from ADS-B ratios associated with the corresponding cells;

   after the end of said detection time window:

   • a step of starting a computation time window of a determined duration;
   • a step (404) of computing pressure and temperature values ($P_0$; $T_0$) at sea level for all of the cells, from all of the pairs (C; H) acquired for said cells during a determined period, and of computing a correction of the barometric altitude from the temperature and pressure values at sea level, for all of the targets detected by at least one sensor, on the vertical line of said cells (302).

2. The method for correcting the barometric altitude of aircraft according to claim 1, **characterised in that** the computation of pressure and temperature values ($P_0$; $T_0$) at sea level that is performed during said computing step (404) at the end of said computation time window is carried out on the basis of two pairs of values ($C_i$; $H_i$) and ($C_j$; $H_j$) acquired during said detection time window, according to the following formulae:

$$P_0 = \frac{P_{0standard}}{1 - \dfrac{na(C_j H_i - C_i H_j)}{T_{0standard}(C_j - C_i)}},$$

and

$$T_0 = T_{0standard}\frac{\left(H_i - \dfrac{T_{0standard}}{a}\left(\dfrac{P_0 - P_{0standard}}{nP_0}\right)\right)}{C_i\left(1 - \left(\dfrac{P_0 - P_{0standard}}{nP_0}\right)\right)},$$

where:

   - H is the geometric altitude;
   - C is the barometric altitude;
   - $T_0$ is the temperature at sea level, wherein $T_{0standard}$ = 288.15 K;
   - $P_0$ is the pressure at sea level, wherein $P_{0standard}$ = 1013.25 hPa;
   - a is the drop in temperature with the altitude, in this case a = 0.0065°C.m$^{-1}$;
   - n=5.52561.

3. The method for correcting the barometric altitude of aircraft according to claim 1, **characterised in that** said at least one sensor is an A/C mode secondary radar, the correction of the barometric altitude that is performed during said computing step (404) for a detection originating from a secondary surveillance radar providing a barometric altitude that is corrected according to the following formula:

$$C_{corr} = \frac{T_0}{T_{0standard}} \left( C \left(\frac{P_{0standard}}{P_0}\right)^{\frac{1}{n}} + \frac{T_{0standard}}{a} \left( 1 - \left(\frac{T_{0standard}}{T_0}\right)^{\frac{1}{n}} \right) \right).$$

4. The method for correcting the barometric altitude of aircraft according to claim 1, **characterised in that** said pairs of values (C; H), stored during said step (403) of acquiring and storing, are deleted if they correspond to detections at altitude levels below a first determined threshold and/or above a second determined threshold.

5. The method for correcting the barometric altitude of aircraft according to any one of claims 2 to 4, **characterised in that** said two pairs of values $(C_i; H_i)$ and $(C_j; H_j)$ are, respectively, the two pairs that correspond to the two detections at a lower geometric altitude H.

6. The method for correcting the barometric altitude of aircraft according to claim 5, **characterised in that** said computing step (404) further comprises a step of verifying the coherence of the values of the pairs (C; H) that are stored for a given cell (302), with a pair of values (C; H) being considered to be coherent if the difference between the corrected value of the barometric altitude C and the geometric altitude H is below a determined threshold or otherwise is incoherent, with one or more pairs of values that are considered to be incoherent entailing the selection of two different pairs $(C_i; H_i)$ and $(C_j; H_j)$.

7. The method for correcting the barometric altitude of aircraft according to claim 1, **characterised in that** pressure and temperature values at sea level $(P_0; T_0)$ are computed during said computing step (404), for all of the sets of pairs of values (C; H) of a given cell (302), said computing step (404) comprising an additional computation providing a mean of the computed values $(P_0; T_0)$ and applying the mean value of the pair $(P_0; T_0)$ to said cell (302).

8. The method for correcting the barometric altitude of aircraft according to claim 1, **characterised in that** said computing step (404) comprises an additional computation of the pressure and temperature values $(P_0; T_0)$ at sea level for cells for which no pair of values $(P_0; T_0)$ is assigned and juxtaposed to at least one determined number of adjacent cells, for which values $(P_0; T_0)$ have been determined, said computation assigning the barycentric mean of the values $(P_0; T_0)$ of all of the adjacent cells to said cells.

9. The method for correcting the barometric altitude of aircraft according to claim 8, **characterised in that** the determined number of adjacent cells, for which values $(P_0; T_0)$ have been determined, is 4.

10. The method for correcting the barometric altitude of aircraft according to any one of the preceding claims, **characterised in that** no value of the pair $(P_0; T_0)$ is computed for a given cell (302) during said computing step (404) if the number of pairs of values (C; H) stored for said cell (302) is less than a predetermined number.

11. The method for correcting the barometric altitude of aircraft according to claim 10, **characterised in that** the predetermined number of pairs of stored values (C; H) is 5.

12. The method for correcting the barometric altitude of aircraft according to any one of the preceding claims, **characterised in that** the pressure and temperature values at sea level $(P_{0n}; T_{0n})$ for a given cell (302), as computed during said computing step (404) for a time window n, are smoothed with the values $(P_{0n-1}; T_{0n-1})$ determined for said cell (302) for a preceding time window n-1, said smoothing assigning the value $\alpha(P_{0n-1}; T_{0n-1}) + (1-\alpha).(P_{0n}; T_{0n})$ to said pair of values $(P_0; T_0)$, with $\alpha$ being a coefficient between 0 and 1.

13. An air traffic control system, **characterised in that** it comprises means that are designed to implement a method for correcting the altitude of aircraft according to any one of the preceding claims.

FIG.1

FIG.2

100

308   309   310   301

307

(P₀;T₀)   302   303

304

306   305

FIG.3

H

(C₄;H₄)

(C₆ ;H₆)

(C₁ ;H₁)

(C₅;H₅)

(C₃;H₃)

(C₂;H₂)

302

FIG.5

Timer= ∅ ⟶

? Présence (C ;H) — 401

Sélection de la cellule — 402

Mémorisation (C ;H) — 403

NON ⟵ Timer < Δt

OUI — 404

Calcul (P₀;T₀) Corrections

**FIG.4**

**EP 2 366 094 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5402116 A, ASHLEY ALLAN